# EUROPÄISCHE PATENTSCHRIFT

(11) **EP 1 636 505 B1**
(45) Veröffentlichungstag und Bekanntmachung des Hinweises auf die Patenterteilung: **18.04.2007**
(21) Anmeldenummer: 05715325.6
(22) Anmeldetag: 14.02.2005
(51) Int. Cl.: F16D 25/0638, F16D 27/00

(54) **FLUIDISCH BETÄTIGBARE DREHMITNEHMERKUPPLUNG**
FLUIDICALLY ACTUATABLE ROTARY DRIVING COUPLING
ACCOUPLEMENT D'ENTRAINEMENT ROTATIF ACTIONNABLE PAR UN FLUIDE

(30) Priorität: 12.02.2004 DE 102004007153
(43) Veröffentlichungstag der Anmeldung: 22.03.2006
(73) Patentinhaber: Ortlinghaus-Werke GmbH, 42929 Wermelskirchen (DE)
(72) Erfinder: SEEGER, Herbert, 32547 Bad Oeynhausen (DE); MELLER, Udo, 42929 Wermelskirchen (DE)
(74) Vertreter: Füssel, Michael
(86) Internationale Anmeldenummer: PCT/EP2005/001461
(87) Internationale Veröffentlichungsnummer: WO 2005/078303

(56) Entgegenhaltungen:
- FR-A- 2 780 464
- US-A- 3 403 763
- US-A- 4 664 242

## Beschreibung

Die vorliegende Erfindung betrifft eine fluidisch betätigbare Drehmitnehmerkupplung.

Derartige Drehmitnehmerkupplung z.B. aus US-A-3 403 763 bekannt, dient im Maschinenbau dazu, die Drehbewegung einer Antriebswelle bedarfsweise auf eine Abtriebswelle zu übertragen, wobei die Drehmitnehmerkupplung naturgemäß im Kupplungsschluß oder im offenen Zustand steht oder im Übergangsbereich schleifend betrieben wird.

Im Kupplungsschluß müssen die jeweiligen Mitnehmerscheiben über eine Kolben-Zylinder-Einheit und einen zugehörigen Ringkolben zur Übertragung des geforderten Drehmomentes mit hohem Druck aufeinander gepreßt werden.

Hierzu dienen Kolben-Zylinder-Einheiten, aus denen das Betätigungsfluid über einen mitdrehenden Druckraum der Stirnfläche des Ringkolbens aufgegeben wird. Ein grundsätzliches Problem derartiger Drehmitnehmerkupplungen besteht folglich darin, daß es relativ zueinander rotierende Dichtflächen gibt, die zumindest dann, wenn sich die Drehmitnehmerkupplungen im Kupplungsschluß befinden, mit der antriebsseitigen Drehzahl relativ zueinander rotieren.

Die Versorgung des Druckraums zur Druckbeaufschlagung der Mitnehmerscheiben kann daher nur über eine Drehdurchführung mit angeschlossenem Kanalsystem erfolgen, wobei von dem Kanalsystem ein Teilkanal mit der Kupplungswellendrehzahl rotiert und der andere Teilkanal nicht und wobei beide Teilkanäle gegenüber dem Druck aus der druckbeaufschlagenden Kolben-Zylinder-Einheit druckabgedichtet ist.

Es muß daher eine druckdichte Drehdurchführung zwischen dem Ausgang der Kolben-Zylinder-Einheit und dem mit dem weiteren Druckraum kommunizierenden Kanalsystem vorgesehen sein.

Insbesondere bei großen Maschinenanlagen, zum Beispiel bei hydraulischen Pressen aus der Kraftfahrzeugindustrie, sind hohe Drücke von bis zu etwa 100 bar über eine derartige Drehdurchführung so abzudichten, daß jegliche Kontamination der Umwelt unterbleibt.

Der damit verbundene Bauaufwand ist allerdings erheblich.

Es besteht daher das Bedürfnis nach einer fluidisch betätigbaren Drehmitnehmerkupplung, bei welcher die durch Relativrotation gegeneinander bewegten Teile zwischen der Drehmitnehmerkupplung und der Kolben-Zylinder-Einheit keiner aufwendigen hydraulischen oder pneumatischen Abdichtungsmaßnahmen bedürfen.

Es ist daher Aufgabe der vorliegenden Erfindung, diesen Nachteil aus dem Stand der Technik zu beseitigen und Maßnahmen anzugeben, mit welchen aufwendige Drehdurchführungen zwischen der Kolben-Zylinder-Einheit und der Drehmitnehmerkupplung eingespart werden können.

Diese Aufgabe löst die Erfindung mit den Merkmalen des Hauptanspruchs.

Aus der Erfindung ergibt sich der Vorteil, daß die Kolben-Zylinder-Einheit zusammen mit demjenigen Kupplungsbauteil, welches auch die mit dem weiteren Druckraum kommunizierende Leitungsverbindung trägt, eine Baueinheit bildet, dessen Bestandteile keine Relativrotationen zueinander ausführen.

Die Kolben-Zylinder-Einheit ist daher mitdrehend zum Beispiel mit der Kupplungswelle verbunden und gegebenenfalls entsprechend gelagert, so daß hinsichtlich der Forderung nach Druckdichtigkeit zwischen der Kolben-Zylinder-Einheit und der Kupplung von einem starren System ausgegangen werden kann.

Die Kolben-Zylinder-Einheit zusammen mit der Kupplungswelle bzw. allgemein demjenigen Kupplungsbauteil, an welchem auch die Mündungsöffnung der Verbindungsleitung in den weiteren Druckraum sitzt, kann daher als statisches System betrachtet werden, bei welchem die geforderte Druckdichtigkeit ohne weiteres durch statische Maßnahmen erzielt werden kann.

Diese statischen Maßnahmen können beispielsweise in druckdichten Flanschverbindungen zwischen Kupplungswelle und Kolben-Zylinder-Einheit bestehen.

Einer Drehdurchführung für das Betätigungsfluid bedarf es daher nicht mehr.

Zweckmäßigerweise wird die Kolben-Zylinder-Einheit von einem Außenkraftgeber beaufschlagt. Der Außenkraftgeber weist einen in Axialrichtung der Kolben-Zylinder-Einheit bewegbaren Läufer und einen zugeordneten Stator auf. Der Läufer soll in Axialrichtung der Kolben-Zylinder-Einheit verfahrbar sein und Kolben und Zylinder relativ zueinander zwecks Druckerzeugung unter Verringerung des Flüssigkeitsraumes verlagern können.

Hierzu sind verschiedene Ausführungsbeispiele denkbar, von denen in einem ersten Ausführungsbeispiel der Läufer gegenüber dem Stator drehbeweglich gelagert ist. Dann könnte der Läufer drehstarr mit der Kolben-Zylinder-Einheit verbunden sein.

Ein weiteres Ausführungsbeispiel sieht vor, daß Läufer und Stator relativ zueinander nicht drehbar sein sollen.

Für diesen Fall wird vorgeschlagen, daß der Läufer über ein axial wirksames Drehlager an die drehbare Kolben-Zylinder-Einheit angekoppelt ist.

Als in Axialrichtung wirksame Drehlager kommen Gleitlager oder Wälzkörperlager in Betracht.

In einem weiteren Ausführungsbeispiel ist der Außenkraftgeber ein Linearmotor, dessen Läufer nicht nur in Axialrichtung verfahrbar sondern darüber hinaus auch über die Kolben-Zylinder-Einheit rotierend gelagert ist.

Da bei einem derartigen Linearmotor zwischen dem Läufer und dem Stator ein berührungsfreier Ringspalt vorgesehen ist, macht sich diese Weiterbildung der Erfindung auch die freie Drehbeweglichkeit des Läufers zunutze. Derartige Linearmotoren sind beispielsweise elektrisch bzw. magnetoelektrisch angetrieben und gehören zum Stand der Technik. Der besondere Vorteil besteht in der Möglichkeit einer Ansteuerung über einen Servocontroller zum Beispiel abhängig von bestimmten Betriebsparametern.

Gleichwohl ist die Verwendung derartiger magnetoelektrischen Linearmotoren als mitrotierender Bestandteil bei Kolben-Zylinder-Einheiten zur Betätigung von Drehmitnehmerkupplungen nicht bekannt.

Die bei derartigen Drehmitnehmerkupplungen möglichen erheblichen Drücke von bis zu etwa 100 bar und auch darüber können besonders einfach abgetragen werden, wenn die Kolben-Zylinder-Einheit in einem Paar von gegeneinander angestellten Schrägkugellagern gelagert ist.

Die gegenseitige Anstellung der Schrägkugellager, vorzugsweise am Außenumfang der Kolben-Zylinder-Einheit, ermöglicht eine kompakte Bauform und dient insbesondere auch der Verwendbarkeit von standardisierten Bauteilen.

Von besonderem Vorteil ist die Möglichkeit einer einfachen Integration der Erfindung in eine sogenannte Kupplungs-Bremsen-Kombination.

Bei einer derartigen Kupplungs-Bremsen-Kombination dient der Ringkolben einerseits als Kupplungsbetätigungsring und andererseits als Bremsen-Betätigungs-Element. Die jeweilige Funktion ergibt sich aus der jeweiligen Verlagerungsrichtung, wobei allerdings nur in Verbindung mit der Drehmitnehmerkupplung auch die Drehbeweglichkeit der Kolben-Zylinder-Einheit gewährleistet sein muß.

Im Hinblick auf die Bremsfunktion besteht insoweit nicht das Problem einer Rotationsbewegung und somit auch nicht das Problem einer fluidisch dichten Drehdurchführung.

Sofern allerdings die Bremsenbeaufschlagung ebenfalls über einen rotierend gelagerten Ring erfolgt, gelten die gesamten obigen Ausführungen entsprechend.

Bevorzugt wird insoweit allerdings eine Ausführungsform, bei welcher die Kraft auf das Verlagerungselement der Bremse von elastisch vorgespannten Federn aufgebracht wird, welche unter der Druckbeaufschlagung zur Betätigung der Kupplung gegen wachsende Federkraft gespannt werden.

Eine derartige Kupplung-Brems-Kombination arbeitet in zwei genau definierten Endstellungen, nämlich einer BremsStellung, in welcher die Kupplung außer Eingriff und die Bremse im Eingriff ist und einer Kupplungs-Einrück-Stellung, in welcher lediglich die Kupplung eingerückt und die Bremse außer Funktion ist.

Zur Verringerung des Verschleißes an den Kupplungsbelägen kann zusätzlich vorgesehen sein, den Kupplungsraum über ein ebenfalls mitdrehendes Kanalsystem Kühlöl zuzuführen.

Hierfür sind Ausführungsbeispiele angegeben.

Im folgenden wird die Erfindung anhand von Ausführungsbeispielen näher erläutert. Es zeigen:
Fig.1 ein erstes Ausführungsbeispiel der Erfindung;
Fig.2 ein weiteres Ausführungsbeispiel der Erfindung;
Fig.3 ein Ausführungsbeispiel der Erfindung bei einer Kupplungs-Brems-Kombination.

Sofern im folgenden nichts anderes gesagt ist, gilt die folgende Beschreibung stets für alle Figuren.

Die Figuren zeigen eine Drehmitnehmerkupplung 1.

Die Drehmitnehmerkupplung 1 weist Mitnehmerscheiben 2 auf. Die Mitnehmerscheiben 2 sind zum einen drehfest mit der Antriebsvorrichtung 3 und zum anderen drehfest mit der Abtriebsvorrichtung 4 verbunden.

Dabei sitzen die Mitnehmerscheiben 2 geringfügig axial verschiebbar entweder auf der zentralen Kupplungswelle 12 bzw. auf dem von der Kupplungswelle abgewandten Bestandteil der Kupplung.

Für die vorliegenden Betrachtungen ist es prinzipiell gleichgültig, ob die Kupplungswelle 12 als Antriebsvorrichtung oder als Abtriebsvorrichtung betrachtet wird.

Je nach Betrachtungsweise dient dann die angedeutete Riemenscheibe, an dessen Umfang die eingezeigten Kraftvektoren angreifen, als Abtriebs- bzw. Antriebsvorrichtung 4 bzw. 3.

Für alle nicht dargestellten und separat benannten einzelnen Bestandteile der Drehmitnehmerkupplung wird auf den Stand der Technik verwiesen.

Wesentlich ist, daß die an der Kupplung zu übertragenden Reibkräfte von einem Ringkolben 5 aufgebracht werden. Der Ringkolben 5 sitzt hier auf der Kupplungswelle 12 und ist in Axialrichtung verschiebbar.

An seinem von den Mitnehmerscheiben 2 abgewandten Ende weist der Ringkolben 5 eine Stirnfläche auf, die von dem Betätigungsfluid beaufschlagt wird.

Bei dem Betätigungsfluid 11 kann es sich um hydraulische oder pneumatische Medien handeln.

Die Beaufschlagung der Stirnfläche des Ringkolbens 5 erfolgt aus dem Druckraum 30 der Kolben-Zylinder-Einheit 7, die über eine Verbindungsleitung 8 mit einem weiteren Druckraum 6 verbunden ist, wobei die Verbindungsleitung 8 mit einer entsprechenden Öffnung in den weiteren Druckraum 6 mündet.

Dieser weitere Druckraum 6 wird von der Stirnfläche des Ringkolbens 5 verschlossen. Während der Ringkolben 5 auf der Kupplungswelle 12 verschiebbar sitzt und über die nicht näher bezeichneten Dichtungen auch abgedichtet ist, wird er an seinem Außenumfang von einem Kolbengehäuse umfangen, welches die weiteren Verschlußwände des Druckraums 6 bildet.

Bei Druckbeaufschlagung des weiteren Druckraums 6 mit dem Betätigungsfluid 11 wird daher der Kupplungsbetätigungsring 9 so beaufschlagt, daß dieser axial in Richtung zur Drehmitnehmerkupplung 1 verschoben wird. Dabei geraten die Mitnehmerscheiben 2 in form- und kraftschlüssigen Kontakt, so daß die geforderten Drehmomente übertragen werden.

Gezeigt ist in den Ausführungsbeispielen eine Drehmitnehmerkupplung, bei welcher der Kupplungsbetätigungsring bei Druckbeaufschlagung die Kupplung einrückt.

Denkbar ist insoweit aber auch eine Drehmitnehmerkupplung, die zum Beispiel durch Federvorspannung eingerückt wird, während das Betätigungsfluid über einen entsprechend angeordneten weiteren Druckraum zum Auskuppeln der Drehmitnehmerkupplung führt.

Für diesen Fall müßte die dem Druckraum zugewandte Kolbenstirnfläche in Richtung zur Drehmitnehmerkupplung 1 zeigen, während von der gegenüberliegenden Seite der Ringkolben 5 federkraftbeaufschlagt in die Einrückposition der Drehmitnehmerkupplung verlagert wird.

Wesentlich ist nun, daß über die Kolben-Zylinder-Einheit 7 das Betätigungsfluid durch eine Axialbohrung, die hier in der Kupplungswelle 12 vorgesehen ist, in den mitrotierenden weiteren Druckraum 6 geleitet wird.

Hierzu steht die Mündung der Verbindungsleitung 8 ständig mit dem weiteren Druckraum 6 in Verbindung während das andere Ende der Verbindungsleitung 8 am Ausgang der Kolben-Zylinder-Einheit 7 angeordnet ist.

Um zwischen demjenigen Kupplungsbauteil, von welchem aus die Verbindungsleitung 8 in den weiteren Druckraum 6 mündet, im vorliegenden Fall also der Kupplungswelle 12 und der Kolben-Zylinder-Einheit 7, zu einer druckdichten und von Drehdurchführungen freien Verbindung zu gelangen, ist die Kolben-Zylinder-Einheit 7 drehfest, druckfest und mitdrehbar mit der Kupplungswelle 12 verbunden.

Dies bedeutet aber, daß die Kolben-Zylinder-Einheit 7 zusammen mit der Kupplungswelle 12 rotiert, sobald die Kupplung in schleifendem Zustand oder im Einrückzustand ist.

Die Dichtverbindung zwischen der Kolben-Zylinder-Einheit 7 und der Kupplungswelle 12 kann daher aus einer einfach zu fertigenden Flanschverbindung bestehen, die gegebenenfalls über O-Ringdichtungen abgedichtet wird.

Weiterhin zeigen die Figuren unterschiedliche Möglichkeiten der Beaufschlagung der Kolben-Zylinder-Einheit.

In allen Fällen ist jedoch ein Außenkraftgeber 13 vorgesehen. der Außenkraftgeber 13 weist einen in Axialrichtung der Kolben-Zylinder-Einheit 7 beweglichen Läufer 14 und einen zugeordneten Stator 15 auf. Zwischen Stator und Läufer wird nach dem Prinzip von Aktion und Reaktion eine Kraft auf die Kolben-Zylinder-Einheit 7 übertragen, welche letztlich eine Relativverlagerung von Kolben und Zylinder bewirkt, so daß der Druckraum der Kolben-Zylinder-Einheit 7 bei Kraftbeaufschlagung entsprechend verkleinert wird, um die Drehmitnehmerkupplung 1 zu betätigen.

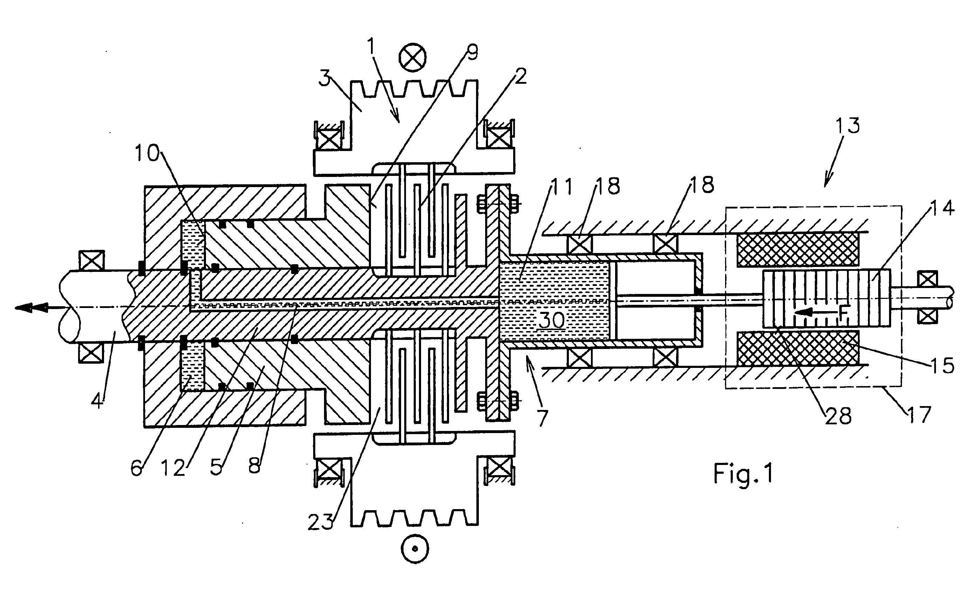

Die Fig.1,3 und 2 offenbaren darüber hinaus unterschiedliche Prinzipien.

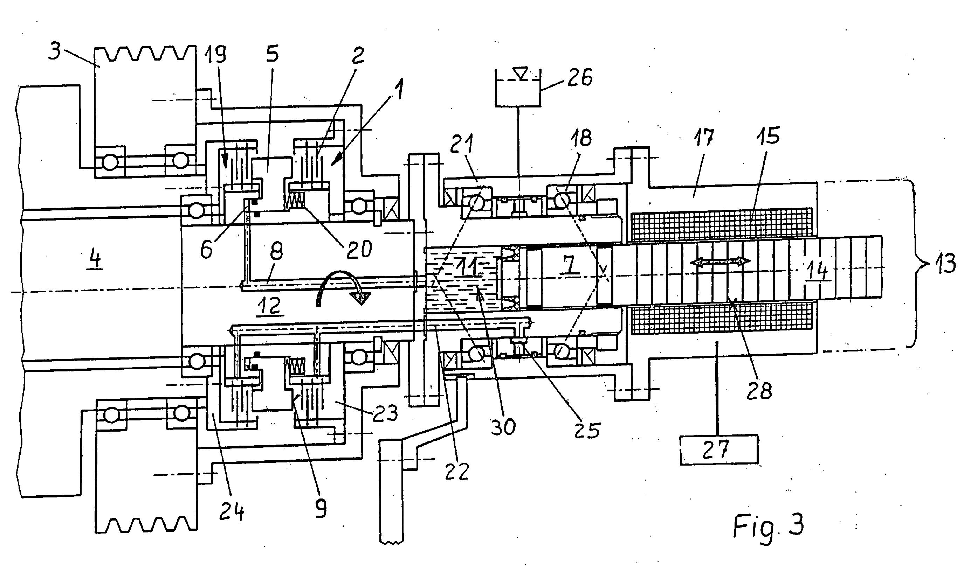

Im Falle der Fig.1 und 3 weist der Außenkraftgeber 13 einen Läufer 14 auf, der gegenüber dem Stator 15 drehbeweglich gelagert ist.

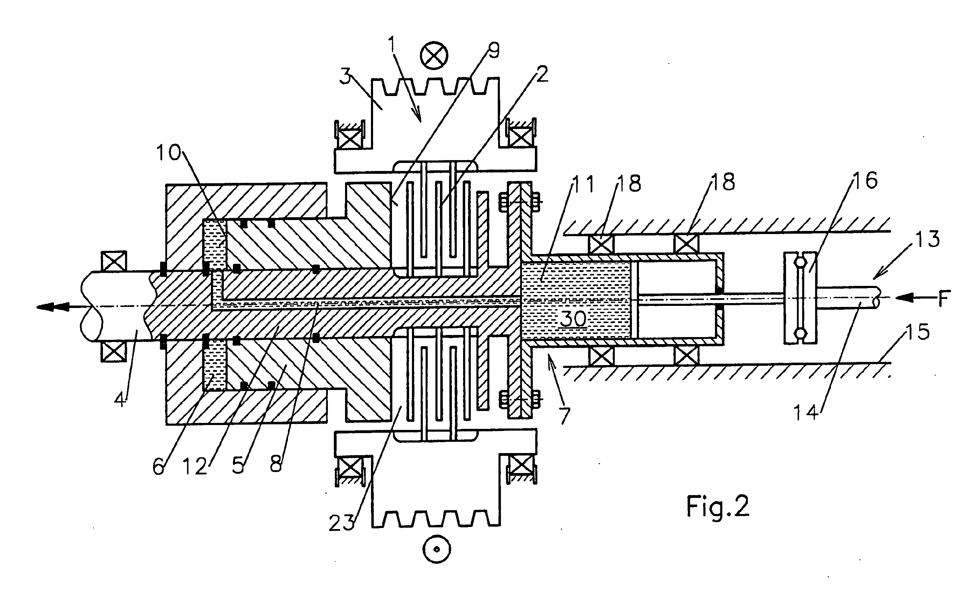

Dabei ist der Läufer 14 zusätzlich auch in Axialrichtung der Kolben-Zylinder-Einheit 7 verfahrbar. Abweichend hiervon zeigt Fig.2 eine Weiterbildung, bei welcher die Kolben-Zylinder-Einheit 7 von dem Läufer 14 eines Außenkraftgebers 13 beaufschlagt wird, welcher Läufer 14 zwar in Axialrichtung der Kolben-Zylinder-Einheit 7 verfahrbar ist, nicht jedoch in einer drehbaren Lagerung sitzt.

Zu diesem Zweck ist zwischen dem Läufer 14 und der Kolben-Zylinder-Einheit 7 ein Axialkraft-Drehlager 16 vorgesehen, welches die Relativbewegung zwischen der drehbaren Kolben-Zylinder-Einheit 7 und dem Außenkraftgeber 13 abträgt.

Es kann sich um ein Gleitlager oder vorzugsweise auch um ein Wälzkörperlager handeln.

Darüber hinaus zeigen die Figuren einen Außenkraftgeber 13 in Form eines Linearmotors 17.

Hier handelt es sich um einen Direktantrieb, bei welchem die lineare Bewegung ohne Zwischenschaltung von mechanischen Getrieben verschleißfrei erzeugt wird. Die Besonderheit besteht darin, daß sich der Linearmotor lediglich aus zwei Teilen zusammensetzt, nämlich dem Läufer 14 und dem Stator 15.

Zusätzlich können in dem Gehäuse des Linearmotors, welches ortsfest angeordnet ist, neben den Motorwicklungen auch eventuell notwendige Lagerungen für den Läufer, für die Positionserfassung sowie gegebenenfalls die Mikroprozessorschaltung untergebracht sein.

Der Vorteil eines Linearmotors, dessen Läufer elektrisch bwz. magnetoelektrisch angetrieben ist, liegt in der absoluten Verschleißfreiheit.

Dabei besteht zwischen dem Läufer 14 und dem Stator 15 ein ringförmiger Luftspalt 28, der naturgemäß vorgesehen sein muß, um etwaigen Kurzschluß zu vermeiden.

Die Ausführungsform der Fig.1 und 3 macht sich diesen ringförmigen Luftspalt zu nutze, da er die freie Rotationsbeweglichkeit des Läufers 14 innerhalb des Stators 15 in jeder Axialstellung garantiert.

Ergänzend hierzu zeigt Fig.3 eine Weiterbildung, bei welcher der Linearmotor 17 über einen Servocontroller 27 angesteuert wird.

Der Servocontroller 27 kann darüber hinaus Bestandteil eines geschlossenen Regelkreises sein, innerhalb dessen vorbestimmte Betriebsparameter oder vorbestimmte Zeitfunktionen für den Druckaufbau etc. ausgeregelt werden.

Im vorliegenden Fall wird der Servocontroller 27 über einen im weiteren Druckraum 6 angeordneten Drucksensor angesteuert, um den Kupplungsbetätigungsring 9 nach einer vorgegebenen Zeitfunktion zu verlagern.

Selbstverständlich können auch alle anderen sinnvollen Betriebsparameter als Inputgrößen für den Servocontroller verwendet werden, zum Beispiel die Reibbelagtemperatur, das Kupplungsspiel, der Kupplungsverschleiß usw.

Zusätzlich zeit Fig.3, daß die Kolben-Zylinder-Einheit 7 an einem Paar von gegeneinander angestellten Schrägkugellagern 18 in Axialrichtung unbeweglich gelagert ist.

Der Vorteil dieser Weiterbildung besteht darin, daß auch bei großen Drücken von bis zu 100 bar und darüber sämtliche auf die Kolben-Zylinder-Einheit 7 wirkenden Axialkräfte über das ortsfeste Gehäuse abgetragen werden.

Weiterhin zeigt Fig.3 ein Ausführungsbeispiel, bei welchem der Kupplungsbetätigungsring 19 in seiner zur Druckbeaufschlagung entgegengesetzten axialen Bewegungsrichtung ebenfalls verschiebbar von einem Gegenkraftgeber 20 beaufschlagt wird. Im vorliegenden Fall ist der Gegenkraftgeber 20 von Schraubenfedern gebildet, die den Kupplungsbetätigungsring 19 auf seiner Kupplungsseite beaufschlagen und bestrebt sind, diesen in Richtung zum weiteren Druckraum 6 zu verlagern.

Diese elastisch vorgespannten Federn werden daher unter wachsender Druckbeaufschlagung des Ringkolbens 5 während der Kupplungsbetätigung gegen zunehmende Federkraft gespannt.

Es ist ersichtlich, daß bei Vergrößerung des Volumens der Kolben-Zylinder-Einheit durch Verlagerung des Kolbens in Richtung zum Außenkraftgeber 30 das Betätigungsfluid 11 den weiteren Druckraum 6 so weit verläßt, wie dies durch die Verlagerung der Kolben-Zylinder-Einheit 7 vorgesehen ist.

Dabei wird der Kupplungsbetätigungsring 9 auf der Kupplungswelle in Richtung zu einer, der Drehmitnehmerkupplung 1 gegenüberliegenden Bremse 19 verlagert, so daß nach Ausrücken der Drehmitnehmerkupplung 1 die sich noch drehende Kupplungswelle 12 anschließend zum Stillstand kommt.

Die vorliegende Erfindung ist daher nicht auf die Anwendung der Drehmitnehmerkupplung 1 allein beschränkt, sondern bietet sich insbesondere auch an in Verbindung mit Bremsen.

Dabei ist es auch denkbar, die Bremse anstelle durch Schraubenfedern durch einen fluidisch d. h. pneumatisch oder hydraulisch beaufschlagten Gegenkraftgeber zu betätigen, der nach Maßgabe der vorliegenden Erfindung ebenfalls mit der Kupplungswelle 12 mitrotierend verbunden sein soll.

Insoweit gilt die bisherige Beschreibung entsprechend.

Wird, wie insbesondere Fig.3 zeigt, die Kolben-Zylinder-Einheit 7 drehbar in einem ortsfesten und in sich geschlossenen Gehäuse 21 gelagert, können weitere kommunizierende Kanäle vorgesehen sein, die in Form eines mitdrehenden Kanalsystems 22 mit dem Kupplungsraum - und/oder sofern vorhanden - mit dem Bremsenraum 24 kommunizierend verbunden sind.

Dabei kommt es darauf an, daß der in sich abgedichtete Raum zwischen dem geschlossenen Gehäuse 21 und der Kolben-Zylinder-Einheit 7 an das mitdrehende Kanalsystem 22 angeschlossen ist.

Dies kann beispielsweise über eine ringförmige Zuführleitung 25 geschehen, die in jeder Drehstellung der Kolben-Zylinder-Einheit 7 mit dem abgeschlossenen Raum zwischen dem ortsfesten Gehäuse 21 und der Kolben-Zylinder-Einheit 7 verbunden ist.

Hierbei bietet es sich insbesondere an, dieses mitdrehende Kanalsystem 22 über die ringförmige Zuführleitung 25 an ein nicht mitdrehendes Kühlölreservoir 26 anzuschließen, um die beim Brems- bzw. Kuppelvorgang entstehende Wärme besser abführen zu können und den Belagverschleiß zu verringern bzw. zu minimieren.

### Bezugszeichenliste:

- 1: Drehmitnehmerkupplung
- 2: Mitnehmerscheibe
- 3: Antriebsvorrichtung
- 4: Abtriebsvorrichtung
- 5: Ringkolben
- 6: weiterer Druckraum
- 7: Kolben-Zylinder-Einheit
- 8: Verbindungsleitung
- 9.: Kupplungsbetätigungsring
- 10: dem weiteren Druckraum zugewandte Kolbenstirnfläche
- 11: Betätigungsfluid
- 12: Kupplungswelle
- 13: Außenkraftgeber
- 14: Läufer
- 15: Stator
- 16: Axialkraft-Drehlager
- 17: Linearmotor
- 18: Schrägkugellager
- 19: Bremse
- 20: Gegenkraftgeber
- 21: ortsfestes Gehäuse
- 22: mitdrehendes Kanalsystem
- 23: Kupplungsraum
- 24: Bremsenraum
- 25: ringförmige Zuführleitung
- 26: Kühlölreservoir
- 27: Servocontroller
- 28: Luftspalt
- 30: Druckraum der Kolben-Zylinder-Einheit

## Patentansprüche

1. Fluidisch betätigbare Drehmitnehmerkupplung (1), von deren Mitnehmerscheiben (2) zumindest eine drehfest mit einer Antriebsvorrichtung (3) und zumindest eine weitere drehfest mit einer Abtriebsvorrichtung (4) verbunden ist, wobei das Betätigungsfluid (11) aus dem Druckraum einer Kolben-Zylinder-Einheit (7) über eine Verbindungsleitung (8) einem weiteren Druckraum (6) zugeführt wird, der von dem Ringkolben (5) eines bei Druckbeaufschlagung axial verschiebbaren Kupplungsbetätigungsringes (9) abgedichtet ist, wobei die dem weiteren Druckraum (6) zugewandte Kolbenstirnfläche - je nach Funktion der Drehmitnehmerkupplung (1) - zum Ein- bzw. Auskuppeln der Drehmitnehmerkupplung (1) mit dem Druck des Betätigungsfluids (11) beaufschlagt wird und wobei die Kolben-Zylinder-Einheit (7) zusammen mit der Verbindungsleitung (8) drehfest, druckdicht und mitdrehbar mit demjenigen Kupplungsbauteil verbunden ist, von welchem aus die Verbindungsleitung (8) in den weiteren Druckraum (6) mündet, **dadurch gekennzeichnet, daß** die Kolben-Zylinder-Einheit (7) von einem Außenkraftgeber (13) beaufschlagt wird, der einen Läufer (14) und einen Stator (15) aufweist, wobei der Läufer (14) in Axialrichtung der Kolben-Zylinder-Einheit (7) verfahrbar und entweder
- gegenüber dem Stator (15) drehbeweglich gelagert ist oder
- über ein Axialkraft-Drehlager (16) an die drehbare Kolben-Zylinder-Einheit (7) angekoppelt ist.

2. Drehmitnehmerkupplung nach Anspruch 1, **dadurch gekennzeichnet, daß** das Axialkraft-Drehlager (16) als Gleitlager ausgeführt ist.

3. Drehmitnehmerkupplung nach Anspruch 1, **dadurch gekennzeichnet, daß** das Axialkraft-Drehlager (16) als Wälzkörperlager ausgeführt ist.

4. Drehmitnehmerkupplung nach einem der Ansprüche 1 bis 3, **dadurch gekennzeichnet, daß** der Außenkraftgeber (13) ein Linearmotor (17) ist.

5. Drehmitnehmerkupplung nach Anspruch 4, **dadurch gekennzeichnet, daß** der Läufer (14) des Linearmotors (17) elektrisch bzw. magnetoelektrisch angetrieben ist.

6. Drehmitnehmerkupplung nach Anspruch 4 oder 5, **dadurch gekennzeichnet, daß** der Linearmotor (17) über einen Servocontroller (27) ansteuerbar ist.

7. Drehmitnehmerkupplung nach einem der Ansprüche 4 bis 6, **dadurch gekennzeichnet, daß** der Linearmotor (17) im geschlossenen Regelkreis mit vorbestimmten Betriebsparametern betrieben wird.

8. Drehmitnehmerkupplung nach einem der Ansprüche 1 bis 7, **dadurch gekennzeichnet, daß** die Kolben-Zylinder-Einheit (7) an einem Paar von gegeneinander angestellten Schrägkugellagern (18) in Axialrichtung unbeweglich gelagert ist.

9. Drehmitnehmerkupplung nach einem der Ansprüche 1 bis 8, **dadurch gekennzeichnet, daß** der Kupplungsbetätigungsring (9) in seiner zur Druckbeaufschlagung entgegengesetzten axialen Bewegungsrichtung ebenfalls verschiebbar von einem Gegenkraftgeber (20) beaufschlagt wird und als Verlagerungselement einer Bremse (19) dient.

10. Drehmitnehmerkupplung nach Anspruch 9, **dadurch gekennzeichnet, daß** der Gegenkraftgeber (20) elastisch vorgespannte und derart angeordnete Federn aufweist, daß diese unter wachsender Druckbeaufschlagung des Ringkolbens (5) im Sinne der Kupplungsbetätigung gegen zunehmende Federkraft gespannt werden.

11. Drehmitnehmerkupplung nach einem der Ansprüche 1 bis 10, **dadurch gekennzeichnet, daß** die Kolben-Zylinder-Einheit (7) drehbar in einem ortsfesten und in sich dicht geschlossenen Gehäuse (21) gelagert ist und über ein mitdrehendes Kanalsystem (22) mit dem Kupplungsraum - und/oder sofern vorhanden - mit dem Bremsenraum (24) kommunizierend verbunden ist.

12. Drehmitnehmerkupplung nach Anspruch 11, **dadurch gekennzeichnet, daß** das mitdrehende Kanalsystem (22) über eine ringförmige Zuführleitung (25) an ein nicht mitdrehendes Kühlölreservoir (26) angeschlossen ist.

## Claims

1. Fluidically operable rotary driving coupling (1), at least one of whose driving discs (2) is connected in a non-rotatable manner to a drive device (3) and at least one further drive disc is connected in a non-rotatable manner to a driven device (4), wherein the actuating fluid (11) is supplied from the pressure chamber of a piston-cylinder unit (7) via a connection line (8) to a further compression chamber (6) which is sealed by the annular piston (5) of a coupling actuation ring (9) which is axially displaceable during pressurisation, wherein - depending upon the function of the rotary driving coupling (1) - the piston end surface facing the further pressure chamber (6) is influenced by the pressure of the actuating fluid (11) for engagement or disengagement of the rotary driving coupling, and wherein the piston-cylinder unit (7) together with the connection line (8) is connected in a non-rotatable, pressure-tight and simultaneously rotatable manner to the particular coupling component, from which the connection line (8) issues into the further pressure chamber (6), **characterised in that** the piston-cylinder unit (7) is influenced by an external force transducer (13) which comprises a rotor (14) and a stator (15), wherein the rotor (14) can be moved in the axial direction of the piston-cylinder unit (7) and is either
- mounted in a rotational manner with respect to the stator (15) or
- coupled via an axial force-pivot bearing (16) to the rotatable piston-cylinder unit (7).

2. Rotary driving coupling as claimed in claim 1, **characterised in that** the axial force-pivot bearing (16) is designed as a sliding bearing.

3. Rotary driving coupling as claimed in claim 1, **characterised in that** the axial force-pivot bearing (16) is designed as a rolling element bearing.

4. Rotary driving coupling as claimed in any one of claims 1 to 3, **characterised in that** the external force transducer (13) is a linear motor (17).

5. Rotary driving coupling as claimed in claim 4, **characterised in that** the rotor (14) of the linear motor (17) is driven in an electrical or magneto-electrical manner.

6. Rotary driving coupling as claimed in claim 4 or 5, **characterised in that** the linear motor (17) can be controlled via a servo-controller.

7. Rotary driving coupling as claimed in any one of claims 4 to 6, **characterised in that** the linear motor (17) is operated in the closed loop with predetermined operating parameters.

8. Rotary driving coupling as claimed in any one of claims 1 to 7, **characterised in that** the piston-cylinder unit (7) is mounted on a pair of inclined ball bearings (18), which are engaged against one another, so as not to be able to move in the axial direction.

9. Rotary driving coupling as claimed in any one of claims 1 to 8, **characterised in that** the coupling actuation ring (9) is influenced in its axial movement direction, which is opposite to pressurisation, likewise in a displaceable manner by means of a counter force transducer (20) and serves as a displacement element of a brake (19).

10. Rotary driving coupling as claimed in claim 9, **characterised in that** the counter force transducer (20) comprises elastically pre-stressed springs which are disposed in such a manner that under increasing pressurisation of the annular piston (5) the springs are stressed in terms of coupling actuation against increasing spring force.

11. Rotary driving coupling as claimed in any one of claims 1 to 10, **characterised in that** the piston-cylinder unit (7) is mounted in a rotatable manner in a positionally fixed and sealingly self-contained housing (21) and is connected in a communicating manner via a simultaneously rotating duct system (22) to the coupling chamber - and/or where present - to the brake chamber (24).

12. Rotary driving coupling as claimed in claim 11, **characterised in that** the simultaneously rotating duct system (22) is connected via an annular supply line (25) to a cooling oil reservoir (26) which does not rotate therewith.

## Revendications

1. Accouplement d'entraînement rotatif (1) actionnable par un fluide, dont au moins un disque d'entraînement (2) est relié, fixe en rotation, à un dispositif d'entraînement (3) et au moins un autre disque d'entraînement (2) est relié, fixe en rotation, à un dispositif de sortie (4), le fluide d'actionnement (11) étant amené à partir de l'espace de pression d'une unité piston-cylindre (7), par l'intermédiaire d'une conduite de liaison (8), dans un second espace de pression (6) qui est rendu étanche par le piston annulaire (5) d'un anneau d'actionnement d'accouplement (9) qui est mobile axialement en présence d'une contrainte de pression, la surface frontale du piston qui est tournée vers le second espace de pression (6) étant contrainte à l'aide de la pression du fluide d'actionnement (11) pour accoupler et désaccoupler l'accouplement d'entraînement rotatif (1) - suivant la fonction de celui-ci - et l'unité piston-cylindre (7), avec la conduite de liaison (8), étant reliée à l'élément d'accouplement à partir duquel la conduite de liaison (8) débouche dans le second espace de pression (6), de manière étanche à la pression et de manière à tourner avec ledit élément d'accouplement, **caractérisé en ce que** l'unité piston-cylindre (7) est contrainte par un générateur de force extérieure (13) qui comporte un rotor (14) et un stator (15), le rotor (14) étant mobile dans le sens axial de l'unité piston-cylindre (7) et
- étant soit monté mobile en rotation par rapport au stator (15)
- soit accouplé à ladite unité piston-cylindre rotative (7) par l'intermédiaire d'un palier de rotation à force axiale (16).

2. Accouplement d'entraînement rotatif selon la revendication 1, **caractérisé en ce que** le palier de rotation à force axiale (16) est conçu comme un palier lisse.

3. Accouplement d'entraînement rotatif selon la revendication 1, **caractérisé en ce que** le palier de rotation à force axiale (16) est conçu comme un palier à roulement.

4. Accouplement d'entraînement rotatif selon l'une des revendications 1 à 3, **caractérisé en ce que** le générateur de force extérieure (13) est un moteur linéaire (17).

5. Accouplement d'entraînement rotatif selon la revendication 4, **caractérisé en ce que** le rotor (14) du moteur linéaire (17) est entraîné par voie électrique ou magnétoélectrique.

6. Accouplement d'entraînement rotatif selon la revendication 4 ou 5, **caractérisé en ce que** le moteur linéaire (17) est apte à être commandé par l'intermédiaire d'une servocommande (27).

7. Accouplement d'entraînement rotatif selon l'une des revendications 4 à 6, **caractérisé en ce que** le moteur linéaire (17) fonctionne en circuit de régulation fermé, avec des paramètres de fonctionnement prédéfinis.

8. Accouplement d'entraînement rotatif selon l'une des revendications 1 à 7, **caractérisé en ce que** l'unité piston-cylindre (7) est montée, fixe dans le sens axial, sur deux roulements à billes obliques (18) installés l'un contre l'autre.

9. Accouplement d'entraînement rotatif selon l'une des revendications 1 à 8, **caractérisé en ce que** l'anneau d'actionnement d'accouplement (9), dans son sens de déplacement axial opposé à la contrainte de pression, est également contraint, mobile, par un générateur de force antagoniste (20) et sert d'élément de déplacement d'un frein (19).

10. Accouplement d'entraînement rotatif selon la revendication 9, **caractérisé en ce que** le générateur de force antagoniste (20) comporte des ressorts à contrainte élastique qui sont disposés de telle sorte que sous la contrainte de pression croissante du piston annulaire (5), ils soient tendus vers une force de ressort croissante dans le sens de l'actionnement de l'accouplement.

11. Accouplement d'entraînement rotatif selon l'une des revendications 1 à 10, **caractérisé en ce que** l'unité piston-cylindre (7) est montée en rotation dans une enveloppe (21) fixe et étanche et communique par l'intermédiaire d'un système, de canalisation (22) qui tourne lui aussi avec l'espace d'accouplement et/ou avec l'espace de frein (24) s'il y en a un.

12. Accouplement d'entraînement rotatif selon la revendication 11, **caractérisé en ce que** le système de canalisation (22) qui tourne lui aussi est relié par une conduite d'amenée annulaire (25) à un réservoir d'huile de refroidissement (26) qui ne tourne pas.
